# EUROPEAN PATENT SPECIFICATION

(11) **EP 1 400 050 B1**
(45) Date of publication and mention of the grant of the patent: **23.05.2012**
(21) Application number: 02747552.4
(22) Date of filing: 28.06.2002
(51) Int. Cl.: H04L 1/00

(54) **COMMUNICATIONS SYSTEM**
KOMMUNIKATIONSSYSTEM
SYSTEME DE COMMUNICATION

(30) Priority: 29.06.2001 GB 0116019
(43) Date of publication of application: 24.03.2004
(73) Proprietor: Sepura plc, Cambridge CB4 1GR (GB)
(72) Inventor: BALL, Diana Margaret, Cambridgeshire CB3 7DR (GB); RAYNE, Mark Wentworth, Near Ely, Cambridgeshire CB6 3ND (GB)
(74) Representative: Tothill, John Paul
(86) International application number: PCT/GB2002/003011
(87) International publication number: WO 2003/003645

(56) References cited:
- EP-A- 0 827 312
- EP-A- 0 998 069
- US-B1- 6 397 368
- BALACHANDRAN K ET AL: "A PROPOSAL FOR EGPRS RADIO LINK CONTROL USING LINK ADAPTATION AND INCREMENTAL REDUNDANCY" BELL LABS TECHNICAL JOURNAL, WILEY, CA, US, vol. 4, no. 3, July 1999 (1999-07), pages 19-36, XP000878195 ISSN: 1089-7089

## Description

The present invention relates to communications systems and in particular to such systems where transmissions of variable length messages can take place.

Many communications systems, and in particular mobile communications systems such as GSM (Global System for Mobile Communications) and TETRA (TErrestrial Trunked RAdio), send their transmissions (which may be of signalling, user information, etc) in fixed length (in terms of their time period) discrete segments or bursts. In time division multiple access (TDMA) systems, such as GSM and TETRA, each transmission burst is typically the length of (or a fraction of the length of) a single timeslot.

In the GSM system, for example, a single timeslot lasts 0.577 ms. The timeslots are arranged in repeating groups of eight timeslots, each group making up a "frame" of length 4.615 ms. (See, for example, M. Mouly and M. Pautet, "The GSM System For Mobile Communications", 1992, ISBN 2-9507190-0-7, Cell and Sys, 4 Rue Elisée Reclus, F-91120, PALAISEAU, FRANCE).

In TETRA, each timeslot lasts 14.167 ms and there are 4 timeslots in a repeating frame of length 56.67 ms. 18 such frames constitute a multi-frame, and 60 multi-frames constitute a hyper-frame. A transmitting mobile station may transmit on one to four timeslots per frame, and a base station usually transmits on all four timeslots per frame (to the same or differing mobile stations). On some occasions (e.g. for random access signalling), a mobile station may transmit short bursts within the first or second half of a timeslot. (See for example, "Terrestrial Trunked Radio (TETRA); Voice plus Data (V+D); Part 2: Air Interface (AI)", EN 300 392-2, available from ETSI, F06921 Sophia Antipolis CEDEX - FRANCE).

In such communication systems, signalling information and other traffic such as user information between a mobile station and a base station, or between a first mobile station and a second mobile station will be transmitted in the fixed length (time period) transmission bursts. Such information is usually transmitted in variable bit-length messages (referred to as "protocol data units" (PDU's) in TETRA). Because these messages can have a variable length, it is common to include in the communications systems signalling protocol a means of indicating to the recipient the length of a given message (e.g. PDU) that is being transmitted. This can be useful where, for example, it is possible to transmit more than one such message (e.g. PDU) in a single transmission burst, as the receiver may use the length of the first message to identify the end of the first message and the start of the second message.

In TETRA, for example, each MAC (Medium Access Control) PDU may contain a length indication in units of octets. A receiver of such a MAC PDU uses the length indication to locate the end of the last octet of the PDU. If the length indication was not used, then it would not be possible to include more than one PDU in a single burst (typically a timeslot).

It is also known where the last indicated part (e.g. octet) of a message is not completely filled with data, to fill that part (octet) up completely with an identifiable pattern of so-called "fill bits" to allow the receiver to identify the true end of the message.

In such a case, a "fill-bit indication" is usually also transmitted (in TETRA by setting a flag in the PDU header) to the receiver to indicate to the receiver that fill bits are present. In TETRA, where fill bits are used, the first unused data bit in the octet is set to "1" and the remaining bits are set to "0". A receiver seeing the fill bits indication searches backwards from the end of the last indicated octet (which it knows from the transmitted length indication) through the fill bits until it finds a "1" (which will be the first bit after the end of the message's useful data). It then knows that it has found the end of the useful data in the message.

The length indications allowed for in existing communications protocols are naturally chosen to match possible message lengths that can be transmitted. Thus in TETRA, for example, a length indication of 6 bits is provided, which can be used to indicate message length up to 61 (or sometimes of 47) octets (the full range of "6-bit" length values is not available because some of the indication values are given special pre-assigned meanings). This is satisfactory for standard TETRA, since using the normal TETRA n/4 DQPSK modulation, the maximum length of PDU's such as MAC-DATA, MAC-RESOURCE or MAC-END is 268 bits or 33.5 octets.

However, new developments in signal processing are making it possible to increase the number of bits of information transmitted in a given time, for example, by increasing the modulation rate or level of the signalling or by increasing the bandwidth of the transmission, or both. For example, although standard TETRA uses n/4 DQPSK modulation which encodes 2 bits per modulation symbol, it would now be possible to use 16-QAM modulation which encodes 4 bits per modulation symbol. This would double the amount of data which can be transmitted in a given time period (such as a single timeslot).

Such enhanced data transmission rates are becoming increasingly desirable for communications systems and so it is desirable to enhance an existing communications systems by adding an increased rate of signalling and data transmission. However, it is also important in such circumstances to maintain backward compatibility with the communications system's existing transmission format and protocol. This means in practice that it is preferred to still use the existing transmission burst structure and protocols, etc, when using the enhanced data transmission rate.

In general it would normally be satisfactory to use the existing transmission burst structure and protocol, etc, with an enhanced data transmission rate. However, the Applicants have recognised that where message length indications are used by the communications system, then the existing length indications may not have sufficient capacity to indicate the maximum quantity of data which could be contained in a transmission message (e.g. PDU) when a new, higher transmission rate is being employed. For example, in the TETRA system, using 16-QAM modulation as discussed above would allow a Protocol Data Unit such as MAC-DATA, MAC-RESOURCE or MAC-END to have a length up to, say, 67 octets. However, as noted above, the maximum octet length that the standard 6-bit TETRA length indication can indicate is 61 octets.

This problem could be avoided by changing the size of (i.e. the number of bits available for) the length indication to allow for longer length messages. For example, in TETRA the length indication could be made 7-bits long rather than 6-bits long. However, the Applicants have recognised that changing the size of the length indication is undesirable, as it would make the signalling protocol for the enhanced data rate arrangement incompatible with the protocol of the existing communications system. This would, for example, mean that communications units having the enhanced data rate capability would need to be programmed with both signalling protocols (to allow backwards compatibility), which would be inconvenient and expensive.

Balachandran K. et al.: "A proposal for EGPRS Radio Link Control Using Link Adaptation and Incremental Redundancy", Bell Labs Technical Journal, Wiley, CA, US, vol. 4, no. 3, July 1999, pages 19-36, XP000878195, ISSN: 1089-7089, describes a communications system in which a pair of stealing bits are used to indicate the format of a MAC-header. The same values of the stealing bits indicate different header formats, depending on the modulation scheme used.

According to a first aspect of the present invention, there is provided a method of operating a TETRA communications system as claimed in claim 1.

According to a second aspect of the present invention, there is provided a data transmitting apparatus for use in a TETRA communications system as claimed in claim 5.

In the present invention, the same length indication message can be used to indicate different length messages, i.e. the meaning of an individual length indication message varies. This allows increased length messages to be indicated using existing available length indication messages and without the need to change the basic length indication protocol (e.g. length indication size).

According to a third aspect of the present invention, there is provided a method of determining the size of a MAC-PDU message in a TETRA communications system as claimed in claim 2.

According to a fourth aspect of the present invention, there is provided a receiving apparatus for use in a TETRA communications system as claimed in claim 6.

As the same length indication message can have different meanings, it is necessary for both the transmitter and receiver to know the intended meaning of the length indication currently being transmitted. This is achieved by the meaning and interpretation of the length indication message being dependant upon the modulation method being used for the transmission (communication link). These characteristics are convenient to use, because for any transmission between a transmitter and a receiver along a communication link, the transmitting and receiving parties must both know and understand the characteristics of the communication link and data transmission.

In all cases, the transmitter and receiver would know or be able to determine the relevant characteristic(s). For example, where both low and high data rates can be used, the receiving party may be able to determine the modulation method being used by analysing the incoming transmission.

Additionally or alternatively, the transmission characteristics, etc, will have been previously arranged and indicated to the receiver and transmitter, such that both will know the characteristic in question before the transmission takes place. For example, the communications system's signalling protocol will probably require the transmitting unit to use an agreed modulation method for the transmission.

For example, in the TETRA, arrangement discussed above, it may be that the normal π/4 DQPSK modulation is used by default and/or on start-up, with a switch to a higher level of modulation, such as 16-QAM, only taking place on a specific instruction from, e.g. a base station, or once agreed by a signalling exchange between communications units. The same could apply to the change back to π/4 DQPSK modulation (or to another modulation rate). In these cases the characteristics of the transmission would be prearranged between the transmitter and receiver (and before any characteristic change takes place).

The fill-bits technique discussed above could be used in this arrangement to fill the burst from the true end of the message to the end of the available data portion and to allow the receiver to more easily identify the true end of the message by searching backward from the maximum possible size of the message (indicated end of the data portion) until the first fill-bit is located, as discussed above.

One disadvantage of this arrangement is that it could preclude sending multiple messages (e.g. PDU's) in a single transmission burst (e.g. timeslot), since when two or more messages are included in a single burst, a receiver may then be unable to identify the end of the first message.

In a preferred embodiment of this arrangement therefore, each length indication could have an ascribed value (its normal value) for a first set of criteria (e.g. normal data rate transmissions) and some but not all of the length indication messages would retain that meaning for a second set (and other sets) of criteria (e.g. higher data rate transmissions) but with one or more length indication messages (values), and preferably one only, and most preferably the longest available length indication, being ascribed the meaning "maximum possible length" for the second set (and/or other sets) of criteria. This would then allow the length of messages up to a particular value to be indicated properly for (e.g.) all criteria, with only longer messages at e.g. higher data rates using the indication "maximum possible length". This would then allow two shorter messages at least to be included in a single transmission burst, which is still useful, as the ability to include multiple messages in a single burst is most useful where each individual message is one half or less of the maximum message (e.g. transmission burst) length.

The variable meaning and interpretation of the length indication message is provided by using a multiplying factor for the burst length indication value, which multiplying factor varies according to the modulation method being used. Each length indication value preferably indicates a number of length "units" (e.g. octets of bits), and the length of the message is found by multiplying the number of length units indicated by the appropriate multiplying factor.

The multiplying factor can be selected as desired, e.g. on the basis of the maximum size of message that can be transmitted under the relevant transmission characteristics. Thus, for example, in the TETRA example discussed above, given a fixed-size length indication, the multiplying factor would be set to "one" for the π/4 DQPSK modulation, and to "two" when 16-QAM modulation was in use. This would allow the same 6-bit length indications to behave correctly for "standard" TETRA, yet have a capacity of 94 octets when the higher modulation rate was in use. If a yet higher level modulation scheme, e.g. 64-QAM, was introduced later, a new multiplier value "three" could be introduced, and so on.

In this arrangement it is possible that, depending on the multiplier value, there may be one or more fewer useful data "units" (e.g. octets) in the message than is actually indicated by the length indication. In that case, the unused "part" (octets) of the length indication are preferably filled with fill-bits to pad out the end of the transmission burst with an identifiable pattern of fill bits, and the receiver locates the end of the useful part of the message by searching back through the fill-bits from the end of the message as indicated by the length indication until the first fill-bit is located. In this case, a fill-bit indication may also be transmitted, where appropriate, and the receiver will locate the message by assuming that it fills the burst and then removing the fill-bits as appropriate.

The length indication message of the present invention is included with the message itself, as is known in the art.

It is preferred to use "fill bits" techniques as discussed above to pad out messages where necessary when the true end of the message does not match exactly the available length indication messages. In such a case, a fill bits indication message, which is preferably included in the message itself, is preferably transmitted to the receiver, as is known in the art.

The present invention also extends to a mobile station and a base station of a TETRA mobile communications system incorporating any or all of the above aspects and preferred features of the present invention.

It will be appreciated by those skilled in the art that the present invention can be implemented in a removable memory module for a TETRA communications unit (such as a SIM (Subscriber Identity Module)). Thus the present invention also extends to such a memory module incorporating any or all of the above aspects and preferred features of the present invention. Such a memory module may comprise not only a memory for storing data, but also any necessary processing means for carrying out the invention.

The methods in accordance with the present invention may be implemented at least partially using software e.g. computer programs. It will thus be seen that when viewed from further aspects the present invention provides computer software specifically adapted to carry out the methods hereinabove described when installed on data processing means, and a computer program element comprising computer software code portions for performing the methods hereinabove described when the program element is run on data processing means. The invention also extends to a computer software carrier comprising such software which when used to operate a system comprising data processing means causes in conjunction with said data processing means said system to carry out the steps of the method of the present invention. Such a computer software carrier could be a physical storage medium such as a ROM chip, CD ROM or disk, or could be a signal such as an electronic signal over wires, an optical signal or a radio signal such as to a satellite or the like.

It will further be appreciated that not all steps of the method of the invention need be carried out by computer software.

A preferred embodiment of the present invention will now be described by way of example only.

The present invention is described with reference to the TETRA system.

Table 1 below shows the standard TETRA uplink MAC-END PDU (Protocol Data Unit) message.

**Table 1**

| | **Information Element** | **Length** | **Value** | **Remark** |
|---|---|---|---|---|
| 11 | PDU type | 2 | 01₂ | MAC-END or MAC-FRAG |
| 12 | PDU subtype | 1 | 1 | MAC-END |
| 13 | Fill bit indication | 1 | 0 | No fill bits present |
| | | | 1 | Fill bit(s) present |
| 14 | Length indication | 6 | 000000₂ | Reserved |
| | | | 000001₂ | Reserved |
| | | | 000010₂ | Length of MAC PDU in octets |
| | | | ...etc. | ...etc. |
| 15 | | | 100010₂ | Longest MAC PDU |
| | | | 100011₂ | Reserved |
| | | | ...etc. | ...etc. |
| | | | 101111₂ | Reserved |
| | | | 11xxxx₂ | Reservation requirement element |
| 16 | TM-SDU | Varies | | |

Such a MAC-END Protocol Data Unit is used to carry the last portion of a higher layer Protocol Data Unit which has been fragmented into two or more portions which will fit into individual TETRA timeslots. This last portion of the fragmented higher-layer Protocol Data Unit can therefore be of any length. The last fragment or data portion of the higher-layer Protocol Data Unit is contained in the TM-SDU information element 16 of the Protocol Data Unit shown in Table 1. (The TM-SDU is defined as the SDU (Service Data Unit) from the layer above the MAC (Medium Access Control)).

As can be seen from Table 1, the MAC-END PDU has two information elements, 11 and 12, which together define the meaning of the Protocol Data Unit (in this case as a MAC-END PDU). It also includes both a length indication portion 14 and fill bit indication portion 13.

If the Protocol Data Unit (including the TM-SDU) does not make up a complete number of octets, the last octet is padded with fill bits, in the pattern 1, 0, 0,..., 0 up to the end of that octet. The fill bit indication element 13 is then set to "1" to indicate that fill bits have been used.

The length indication information element 14 indicates the total length of the MAC-END PDU in units of octets (bytes). The length indicated includes the variable length TM-SDU information element, and all the preceding information elements, up to and including the PDU type information element 11. It also includes any fill bits which may have been appended to the end of the Protocol Data Unit.

The length indication element 14 has 6 bits, but not all of those bits are used to represent the length of the message (PDU). Firstly, values of the length indication element 14 starting with "11" have been assigned for another purpose. Furthermore, since the minimum possible length of the Protocol Data Unit (which would be with a zero length TM-SDU element 16) is 10 bits, length indication values 000000₂ and 000001₂ have been reserved for some undefined future use. Similarly, as the maximum possible length of a MAC-END PDU is limited by the TETRA burst length and channel characteristics to 268 bits or 33.5 octets, as discussed above, values 100011₂ to 101111₂ have been reserved for some undefined future use.

When the receiver receives the MAC-END PDU, it reads the length indication value 14 and also checks whether the fill bit indication element 13 indicates that fill bits have been used. If fill bits have not been used, the receiver identifies the end of the TM-SDU element 16 of the message by counting octets from the start of the message until it either reaches the number of octets indicated in the length indication element 14 or the end of the data in the overall transmission. If fill bits have been used, the receiver locates the end of the message as above, but then searches back through the fill bits until it finds a "1". The last bit of the TM-SDU element 16 will then be the bit preceding this "1".

The case where a TETRA system is modified to support longer (in terms of bit content, i.e. greater data capacity) transmission bursts, such as would be available to enhanced TETRA systems using higher modulation levels or wider RF frequency bandwidths, or both, will now be considered. In these embodiments, it is assumed that the enhanced TETRA system may use the standard TETRA n/4 DQPSK modulation, giving 2 bits per symbol, 16-QAM giving 4 bits per symbol, or 64-QAM, giving 6 bits per symbol. 16-QAM and 64-QAM therefore represent data rate increases of 2 times and 3 times the rate available with n/4 DQPSK modulation. Using 16-QAM thus increases the number of bits available to the MAC-END (uplink) PDU to 536 (67 octets), and using 64-QAM increases the number of bits available to the MAC-END (uplink) PDU.to 804 (100.5 octets) (assuming that the duration of a transmission burst or timeslot remains unaltered and that the number of overhead symbols remains the same).

However, the maximum length which can be signalled in an unmodified TETRA length indication for a MAC-END PDU is 47 octets, since values 110000₂ and above have been assigned for a different purpose. Even if those values had not been so assigned, the length indication would be limited to 63 octets. However, with 16-QAM it is necessary to signal lengths up to 67 octets, and with 64-QAM, lengths up to 101 octets.

In the preferred embodiment of the present invention to allow the TETRA system to cope with this possibility, the meaning of the length indication element is modified. This is illustrated in Table 2 below, which shows a preferred embodiment of a modified TETRA MAC-END PDU in accordance with the present invention that can be used for a TETRA system employing higher data rates.

**Table 2**

| | **Information Element** | **Length** | **Value** | **Remark** |
|---|---|---|---|---|
| 21 | PDU type | 2 | 01₂ | MAC-END or MAC-FRAG |
| 22 | PDU subtype | 1 | 1 | MAC-END |
| 23 | Fill bit indication | 1 | 0 | No fill bits present |
| | | | 1 | Fill bit(s) present |
| 24 | Length indication | 6 | 000000₂ | Reserved |
| | | | 000001₂ | Reserved |
| | | | 000010₂ | Length of MAC PDU in units of y octets |
| | | | ...etc. | ...etc. |
| 25 | | | 100010₂ | Longest MAC PDU |
| | | | 100011₂ | Reserved |
| | | | ...etc. | ...etc. |
| | | | 101111₂ | Reserved |
| | | | 11xxxx₂ | Reservation requirement element |
| 26 | TM-SDU | Varies | | |
| Note: y = 1 when the MAC-END PDU is sent using n/4 DQPSK y = 2 when the MAC-END PDU is sent using 16-QAM y = 3 when the MAC-END PDU is sent using 64-QAM | | | | |

In Table 2, the length indication element 24 is modified so that its basic meaning in units of octets is multiplied by a factor y which is dependent upon a characteristic (in this case the modulation method used) of the transmission. In the present embodiment, the factor y is "1" for n/4 DQPSK modulation, "2" for 16-QAM and "3" for 64-QAM, although, of course, other multiplying factor values could be used if desired.

The receiver can readily determine which value of "y" is to be used to locate the end of the Protocol Data Unit (message), since it has to know which modulation method is being used to be able to decode the incoming signal in any event.

This embodiment shows a TETRA uplink MAC-END PDU. A multiplier could be used in a similar manner in the length indication element in other TETRA transmission messages, such as MAC-PDUs which may be sent using a higher data rate, such as MAC-DATA, MAC-RESOURCE and downlink MAC-END PDUs.

## Claims

1. A method of operating a TETRA communications system in which discrete MAC-PDU messages comprising a header and a data portion of a variable length can be transmitted, the method comprising transmitting to the receiver an indication of the length of such a MAC-PDU message when it is transmitted, wherein:
the indication of the length of the message is included within the MAC-PDU message itself;
the message length indicated by the length indication message indicates the total length in octets of the MAC-PDU message including the length of the header and data portion of the message and of any fill bits appended to the message; and wherein:
the transmitter selects the value of the length indication message to be included with a message being transmitted on the basis that the meaning of a given value of the length indication message is to be determined by the receiver by multiplying a basic length value indicated by the length indication message by a multiplying factor which is dependent upon the modulation method being used for the transmission of the MAC-PDU message, whereby the same value of the length indication message can be used to indicate different lengths of MAC-PDU messages.

2. A method of determining the size of a MAC-PDU message in a TETRA communications system comprising a header and a data portion which has been received through a communications link, the method comprising:
receiving a length indication message indicating the length of the MAC-PDU message, wherein length indication message is included within the MAC-PDU message itself and the message length indicated by the length indication message indicates the total length in octets of the MAC-PDU message, including the length of the header and data portion of the message and of any fill bits appended to the message; and
interpreting the received length indication message to determine the length of the MAC-PDU message by multiplying a basic length value indicated by the length indication message by a multiplying factor which is dependent upon the modulation method being used for the transmission of the MAC-PDU message, whereby the same value of the length indication message can be used to indicate different MAC-PDU message lengths.

3. The method of claim 1 or 2, wherein each length indication message value indicates a number of length units, and the length of the MAC-PDU message is found by multiplying the indicated number of length units by the multiplying factor.

4. The method of any one of claims 1 to 3, wherein the unit of length for the length indication messages is dependent upon one or more predefined criteria.

5. A data transmitting apparatus for use in a TETRA communications system which can transmit discrete MAC-PDU messages comprising a header and a data portion of a variable length, the apparatus comprising:
means for transmitting to the receiver of a message an indication of the length of the MAC-PDU message, wherein:
the indication of the length of the message is included within the MAC-PDU message itself;
the message length indicated by the length indication message indicates the total length in octets of the MAC-PDU message including the length of the header and data portion of the message and of any fill bits appended to the message; and wherein:
the apparatus selects the value of the length indication message to be included with a message being transmitted on the basis that the meaning of a given value of the length indication message is to be determined by the receiver by multiplying a basic length value indicated by the length indication message by a multiplying factor which is dependent upon the modulation method being used for the transmission of the MAC-PDU message, whereby the same value of the length indication message can be used to indicate different lengths of MAC-PDU message.

6. A receiving apparatus for use in a TETRA communications system in which discrete MAC-PDU messages comprising a header and a data portion of a variable length can be transmitted, the apparatus comprising:
means for receiving a length indication message indicating the length of a transmitted MAC-PDU message, wherein the indication of the length of the message is included within the MAC-PDU message itself, and the message length indicated by the length indication message indicates the total length in octets of the MAC-PDU message including the length of the header and data portion of the message and of any fill bits appended to the message; and
means for interpreting the received length indication message to determine the length of the MAC-PDU message by multiplying a basic length value indicated by the length indication message by a multiplying factor which is dependent upon the modulation method being used for the transmission of the MAC-PDU message, whereby the same value of the length indication message can be used to indicate different lengths of MAC-PDU messages.

7. A mobile station of a TETRA mobile communications system comprising the apparatus of claim 5 or 6.

8. A base station of a TETRA mobile communications system comprising the apparatus of claim 5 or 6.

9. A removable memory module for a TETRA communications unit comprising the apparatus of claim 5 or 6.

10. A computer program element comprising computer software code portions for performing the method of any one of claims 1 to 4 when the program element is run on data processing means.

## Patentansprüche

1. verfahren zum Betreiben eines TETRA-Kommunikationssystems, in dem diskrete MAC-PDU-Nachrichten, die einen Header und einen Datenabschnitt variabler Länge umfassen, übertragen werden können, das Verfahren umfassend Übertragen einer Anzeige der Länge einer derartigen MAC-PDU-Nachricht, wenn sie übertragen wird, an den Empfänger, wobei:
die Anzeige der Länge der Nachricht innerhalb der MAC-PDU-Nachricht selbst enthalten ist;
die durch die Längenanzeigenachricht angezeigte Nachrichtenlänge die Gesamtlänge der MAC-PDU-Nachricht einschließlich der Länge des Headers und Datenabschnitts der Nachricht und etwaiger an die Nachricht angefügte Füllbits in Oktetten anzeigt; und wobei
der Sender den wert der Längenanzeigenachricht, die mit einer Nachricht, die übertragen wird, aufzunehmen ist, auf der Basis auswählt, dass die Bedeutung eines gegebenen Werts der Längenanzeigenachricht von dem Empfänger durch Multiplizieren eines grundlegenden Längenwerts, der von der Längenanzeigenachricht angezeigt wird, mit einem Multiplikationsfaktor, der von dem Modulationsverfahren, das für die Übertragung der MAC-PDU-Nachricht verwendet wird, abhängig ist, zu bestimmen ist, wodurch der gleiche wert der Längenanzeigenachricht zur Anzeige verschiedener Längen von MAC-PDU-Nachrichten verwendet werden kann.

2. Verfahren zum Bestimmen der Größe einer MAC-PDU-Nachricht in einem TETRA-Kommunikationssystem, umfassend einen Header und einen Datenabschnitt, die durch eine Kommunikationsverbindung empfangen wurde, das Verfahren umfassend:
Empfangen einer Längenanzeigenachricht, die die Länge der MAC-PDU-Nachricht anzeigt, wobei die Längenanzeigenachricht innerhalb der MAC-PDU-Nachricht selbst enthalten ist und die durch die Längenanzeigenachricht angezeigte Nachrichtenlänge die Gesamtlänge der MAC-PDU-Nachricht einschließlich der Länge des Headers und Datenabschnitts der Nachricht und etwaiger an die Nachricht angefügte Füllbits in Oktetten anzeigt; und
Interpretieren der empfangenen Längenanzeigenachricht zum Bestimmen der Länge der MAC-PDU-Nachricht durch Multiplizieren eines grundlegenden Längenwerts, der von der Längenanzeigenachricht angezeigt wird, mit einem Multiplikationsfaktor, der von dem Modulationsverfahren, das für die Übertragung der MAC-PDU-Nachricht verwendet wird, abhängig ist, wodurch der gleiche Wert der Längenanzeigenachricht zur Anzeige verschiedener MAC-PDU-Nachrichten-Längen verwendet werden kann.

3. Verfahren nach Anspruch 1 oder 2, wobei jede Längenanzeigenachricht eine Zahl von Längeneinheiten anzeigt und die Länge der MAC-PDU-Nachricht durch Multiplizieren der angezeigten Zahl von Längeneinheiten mit dem Multiplikationsfaktor gefunden wird.

4. Verfahren nach einem der Ansprüche 1 bis 3, wobei die Längeneinheit für die Längenanzeigenachrichten von einem oder mehreren im Voraus definierten Kriterien abhängig ist.

5. Datenübertragungsvorrichtung zur Verwendung in einem TETRA-Kommunikationssystem, das diskrete MAC-PDU-Nachrichten, die einen Header und einen Datenabschnitt variabler Länge umfassen, übertragen kann, die Vorrichtung umfassend:
Mittel zum Übertragen einer Anzeige der Länge der MAC-PDU-Nachricht an den Empfänger einer Nachricht, wobei:
die Anzeige der Länge der Nachricht innerhalb der MAC-PDU-Nachricht selbst enthalten ist;
die durch die Längenanzeigenachricht angezeigte Nachrichtenlänge die Gesamtlänge der MAC-PDU-Nachricht einschließlich der Länge des Headers und Datenabschnitts der Nachricht und etwaiger an die Nachricht angefügte Füllbits in Oktetten anzeigt; und wobei
die Vorrichtung den Wert der Längenanzeigenachricht, die mit einer Nachricht, die übertragen wird, aufzunehmen ist, auf der Basis auswählt, dass die Bedeutung eines gegebenen Werts der Längenanzeigenachricht von dem Empfänger durch Multiplizieren eines grundlegenden Längenwerts, der von der Längenanzeigenachricht angezeigt wird, mit einem Multiplikationsfaktor, der von dem Modulationsverfahren, das für die Übertragung der MAC-PDU-Nachricht verwendet wird, abhängig ist, zu bestimmen ist, wodurch der gleiche Wert der Längenanzeigenachricht zur Anzeige verschiedener Längen von MAC-PDU-Nachrichten verwendet werden kann.

6. Empfangsvorrichtung zur Verwendung in einem TETRA-Kommunikationssystem, in dem diskrete MAC-PDU-Nachrichten, die einen Header und einen Datenabschnitt variabler Länge umfassen, übertragen werden können, die vorrichtung umfassend:
Mittel zum Empfangen einer Längenanzeigenachricht, die die Länge einer übertragenen MAC-PDU-Nachricht anzeigt, wobei die Anzeige der Länge der Nachricht innerhalb der MAC-PDU-Nachricht selbst enthalten ist und die durch die Längenanzeigenachricht angezeigte Nachrichtenlänge die Gesamtlänge der MAC-PDU-Nachricht einschließlich der Länge des Headers und Datenabschnitts der Nachricht und etwaiger an die Nachricht angefügte Füllbits in Oktetten anzeigt; und
Mittel zum Interpretieren der empfangenen Längenanzeigenachricht zum Bestimmen der Länge der MAC-PDU-Nachricht durch Multiplizieren eines grundlegenden Längenwerts, der von der Längenanzeigenachricht angezeigt wird, mit einem Multiplikationsfaktor, der von dem Modulationsverfahren, das für die Übertragung der MAC-PDU-Nachricht verwendet wird, abhängig ist, wodurch der gleiche Wert der Längenanzeigenachricht zur Anzeige verschiedener Längen von MAC-PDU-Nachrichten verwendet werden kann.

7. Mobilstation eines TETRA-Mobilkommunikationssystems, umfassend die vorrichtung von Anspruch 5 oder 6.

8. Basisstation eines TETRA-Mobilkommunikationssystems, umfassend die vorrichtung von Anspruch 5 oder 6.

9. Entfernbares Speichermodul für ein TETRA-Kommunikationssystem, umfassend die Vorrichtung von Anspruch 5 oder 6.

10. Computerprogrammelement, umfassend Computer-Softwarecode-Abschnitte zum Ausführen des Verfahrens von einem der Ansprüche 1 bis 4, wenn das Programmelement auf Datenverarbeitungsmitteln ausgeführt wird.

## Revendications

1. Procédé d'exploitation d'un système de communication TETRA dans lequel des messages MAC-PDU discrets comprenant un en-tête et une partie de données de longueur variable peuvent être transmis, le procédé comprenant de transmettre au récepteur une indication de la longueur d'un tel message MAC-PDU lorsqu'il est transmis, dans lequel :
l'indication de la longueur du message est incluse dans le message MAC-PDU lui-même ;
la longueur du message indiquée par le message d'indication de longueur indique la longueur totale en octets du message MAC-PDU, y compris la longueur de l'en-tête et de la partie de données du message et de tous les éventuels bits de remplissage adjoints au message ; et dans lequel :
l'émetteur sélectionne la valeur du message d'indication de longueur à inclure avec un message étant transmis sur la base que la signification d'une valeur donnée du message d'indication de longueur doit être déterminée par le récepteur en multipliant une valeur de longueur de base indiquée par le message d'indication de longueur par un facteur multiplicateur qui dépend du procédé de modulation étant utilisé pour la transmission du message MAC-PDU, moyennant quoi la même valeur du message d'indication de longueur peut être utilisée pour indiquer des longueurs différentes de messages MAC-PDU.

2. Procédé de détermination de la taille d'un message MAC-PDU dans un système de communication TETRA comprenant un en-tête et une partie de données qui a été reçu par l'intermédiaire d'une liaison de communication, le procédé comprenant les étapes consistant à ;
recevoir un message d'indication de longueur indiquant la longueur du message MAC-PDU, où le message d'indication de longueur est inclus dans le message MAC-PDU lui-même et la longueur du message indiquée par le message d'indication de longueur indique la longueur totale en octets du message MAC-PDU, y compris la longueur de l'en-tête et de la partie de données du message et de tous les éventuels bits de remplissage adjoints au message ; et
interpréter le message d'indication de longueur reçu pour déterminer la longueur du message MAC-PDU en multipliant une valeur de longueur de base indiquée par le message d'indication de longueur par un facteur multiplicateur qui dépend du procédé de modulation étant utilisé pour la transmission du message MAC-PDU, moyennant quoi la même valeur du message d'indication de longueur peut être utilisée pour indiquer des longueurs différentes de messages MAC-PDU.

3. Procédé selon la revendication 1 ou la revendication 2, dans lequel chaque valeur de message d'indication de longueur indique un nombre d'unités de longueur, et la longueur du message MAC-PDU est trouvée en multipliant le nombre indiqué d'unités de longueur par le facteur multiplicateur.

4. Procédé selon l'une quelconque des revendications 1 à 3, dans lequel l'unité de longueur pour les messages d'indication de longueur dépend d'un ou de plusieurs critères prédéfinis.

5. Appareil de transmission de données destiné à une utilisation dans un système de communication TETRA qui peut transmettre des messages MAC-PDU discrets comprenant un en-tête et une partie de données de longueur variable, l'appareil comprenant :
des moyens pour transmettre au récepteur d'un message une indication de la longueur du message MAC-PDU, où :
l'indication de la longueur du message est incluse dans le message MAC-PDU lui-même ;
la longueur du message indiquée par le message d'indication de longueur indique la longueur totale en octets du message MAC-PDU, y compris la longueur de l'en-tête et de la partie de données du message et de tous les éventuels bits de remplissage adjoints au message ; et où :
l'appareil sélectionne la valeur du message d'indication de longueur à inclure avec un message étant transmis sur la base que la signification d'une valeur donnée du message d'indication de longueur doit être déterminée par le récepteur en multipliant une valeur de longueur de base indiquée par le message d'indication de longueur par un facteur multiplicateur qui dépend du procédé de modulation étant utilisé pour la transmission du message MAC-PDU, moyennant quoi la même valeur du message d'indication de longueur peut être utilisée pour indiquer des longueurs différentes de messages MAC-PDU.

6. Appareil de réception destiné à une utilisation dans un système de communication TETRA, dans lequel des messages MAC-PDU discrets comprenant un en-tête et une partie de données de longueur variable peuvent être transmis, l'appareil comprenant :
des moyens pour recevoir un message d'indication de longueur indiquant la longueur d'un message MAC-PDU transmis, où l'indication de la longueur du message est incluse dans le message MAC-PDU lui-même, et la longueur du message indiquée par le message d'indication de longueur indique la longueur totale en octets du message MAC-PDU, y compris la longueur de l'en-tête et de la partie de données du message et de tous les éventuels bits de remplissage adjoints au message ; et
des moyens pour interpréter le message d'indication de longueur reçu pour déterminer la longueur du message MAC-PDU en multipliant une valeur de longueur de base indiquée par le message d'indication de longueur par un facteur multiplicateur qui dépend du procédé de modulation étant utilisé pour la transmission du message MAC-PDU, moyennant quoi la même valeur du message d'indication de longueur peut être utilisée pour indiquer des longueurs différentes de messages MAC-PDU.

7. Station mobile d'un système de communication mobile TETRA comprenant l'appareil des revendications 5 ou 6.

8. Station de base d'un système de communication mobile TETRA comprenant l'appareil des revendications 5 ou 6.

9. Module de mémoire amovible destiné à une unité de communication TETRA comprenant l'appareil des revendications 5 ou 6.

10. Élément de programme informatique comprenant des parties de code logiciel informatique pour exécuter le procédé selon l'une quelconque des revendications 1 à 4, lorsque l'élément de programme est exécuté sur des moyens de traitement de données.
